# EUROPEAN PATENT APPLICATION

(11) **EP 3 054 071 A1**
(43) Date of publication of application: **10.08.2016**
(21) Application number: 16153753.5
(22) Date of filing: 02.02.2016
(51) Int. Cl.: E05B 85/10, E05B 85/16

(54) **OPENING/CLOSING MEMBER OPENING/CLOSING APPARATUS**

(30) Priority: 02.02.2015 JP 2015018478
(71) Applicant: AISIN SEIKI KABUSHIKI KAISHA, Kariya-shi, Aichi-ken 448-8650 (JP)
(72) Inventor: KOIZUMI, Takaaki, KARIYA-SHI, AICHI-KEN, 448-8650 (JP); TABATA, Takehiro, KARIYA-SHI, AICHI-KEN, 448-8650 (JP); HAGIMOTO, Masahiro, KARIYA-SHI, AICHI-KEN, 448-8650 (JP)
(74) Representative: Intès, Didier Gérard André

(57) **Abstract**

An opening/closing member opening/closing apparatus includes: an operation handle (12) that is configured to have a sensor section (38, 46) and to be supported in a turning manner by a base member (10) disposed in an opening/closing member (16) of a vehicle (14); and a CPU (73) that performs first control in response to detection by the sensor section (38, 46) in a case where the operation handle (12) is positioned at a first position and that performs second control different from the first control in response to detection by the sensor section (38, 46) in a case where the operation handle (12) is positioned at a second position different from the first position.

## Description

### TECHNICAL FIELD

This disclosure relates to an opening/closing member (e.g. a door) opening/closing apparatus.

### BACKGROUND DISCUSSION

A flush surface has been a trend in automobile design. A surface which is flush means an even surface formed without unevenness or a gap in a body surface or the like. The flush surface causes air resistance of a body to be reduced, and thus high-speed performance, low fuel consumption performance, or the like can be improved. In addition, the flush surface contributes to reduction of wind noise during driving of an automobile or improvement in design.

It is preferable that the flush surface is also formed on an operation handle, which performs an opening/closing operation of a door. International Publication No. WO 2012/175647, Japanese Patent No. 3165570, and Japanese Patent No. 5191157 (References 1 to 3) disclose operation handles on which the flush surface is formed. Reference 1 discloses technology in which a door is locked and unlocked by using the operation handle.

Recently, there is a high demand for an opening/closing member opening/closing apparatus that includes an operation handle having various functions. However, in a case where multiple sensor units for realizing various functions are incorporated in the operation handle, a configuration is complicated, thereby increasing costs.

### SUMMARY

Thus, a need exists for an opening/closing member opening/closing apparatus which can realize various functions without increasing costs.

An aspect of this disclosure provides an opening/closing member opening/closing apparatus including: an operation handle that is configured to have a sensor section and to be supported in a turning manner by a base member disposed in an opening/closing member of a vehicle; and a CPU that performs first control in response to detection by the sensor section in a case where the operation handle is positioned at a first position and that performs second control different from the first control in response to detection by the sensor section in a case where the operation handle is positioned at a second position different from the first position.

In the aspect of this disclosure, the CPU may cause the operation handle to stop turning in response to detection by the sensor section when the operation handle is caused to turn.

In the aspect of this disclosure, the first position may be a projecting position at which a grip section of the operation handle is in a state of projecting from an accommodation section formed in the base member, the first control may be control of locking release of the opening/closing member, and the second control may be control of causing the grip section to project.

In the aspect of this disclosure, the CPU may perform control of releasing a latch of the opening/closing member in response to detection by the sensor section in a case where the operation handle is positioned at the first position and the locking of the opening/closing member is released.

In the aspect of this disclosure, the first position may be an accommodated position at which a grip section of the operation handle is in a state of being accommodated in the accommodation section formed in the base member, the first control may be control of locking the opening/closing member, and the second control may be control of accommodating the grip section.

In the aspect of this disclosure, the CPU may perform control of stopping an engine of the vehicle, in which the opening/closing member is disposed, in a case where the operation handle is positioned at the first position and the opening/closing member is locked.

In the aspect of this disclosure, a part of the sensor section may be disposed on a surface of the grip section on the back side thereof, and another part of the sensor section may be disposed on a surface of the grip section on the front side thereof.

In the aspect of this disclosure, the sensor section may be disposed on a surface of the grip section on the back side thereof, and a high dielectric having a relative dielectric constant higher than that of a material of the grip section may be disposed between the sensor section and a surface of the grip section on the front side thereof.

In the aspect of this disclosure, a grounded conductor may be disposed in at least a part of a surface of the grip section on the front side thereof.

In the aspect of this disclosure, a part of the sensor section may be positioned on an edge section of the operation handle.

In the aspect of this disclosure, the sensor section may be electrically connected to a capacitance type sensor.

According to the aspect of this disclosure, the first control is performed in response to the detection by the sensor section in the case where the operation handle is positioned at the first position and the second control different from the first control is performed in response to the detection by the sensor section in the case where the operation handle is positioned at the second position different from the first position. According to an embodiment disclosed here, since different control is performed depending on a position of the operation handle regardless of sharing the common sensor section, it is possible to simplify a configuration. Accordingly, according to an embodiment disclosed here, it is possible to provide an opening/closing member opening/closing apparatus which can realize various functions without resulting in increasing costs.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram illustrating an opening/closing member opening/closing apparatus according to an embodiment disclosed here;
Figs. 2A and 2B are a plan view and a side view of an operation handle of the opening/closing member opening/closing apparatus according to the embodiment disclosed here;
Figs. 3A and 3B are a plan view and a side view of an internal configuration of the operation handle of the opening/closing member opening/closing apparatus according to the embodiment disclosed here;
Figs. 4A and 4B are perspective views illustrating a state in which the operation handle is accommodated in an accommodation section;
Figs. 5A and 5B are side views illustrating the state in which the operation handle is accommodated in the accommodation section;
Figs. 6A and 6B are plan views illustrating the state in which the operation handle is accommodated in the accommodation section;
Figs. 7A and 7B are perspective views illustrating a state in which a grip section of the operation handle projects from the accommodation section;
Figs. 8A and 8B are side views illustrating the state in which the grip section of the operation handle projects from the accommodation section;
Figs. 9A and 9B are plan views illustrating the state in which the grip section of the operation handle projects from the accommodation section;
Fig. 10 is a flowchart illustrating an operation of the opening/closing member opening/closing apparatus according to the embodiment disclosed here;
Fig. 11 is a flowchart illustrating another operation of the opening/closing member opening/closing apparatus according to the embodiment disclosed here;
Figs. 12A and 12B are a plan view and a side view illustrating an operation handle of an opening/closing member opening/closing apparatus according to Modification Example 1 of the embodiment disclosed here; and
Figs. 13A and 13B are a plan view and a side view illustrating an operation handle of an opening/closing member opening/closing apparatus according to Modification Example 2 of the embodiment disclosed here.

### DETAILED DESCRIPTION

### Embodiment

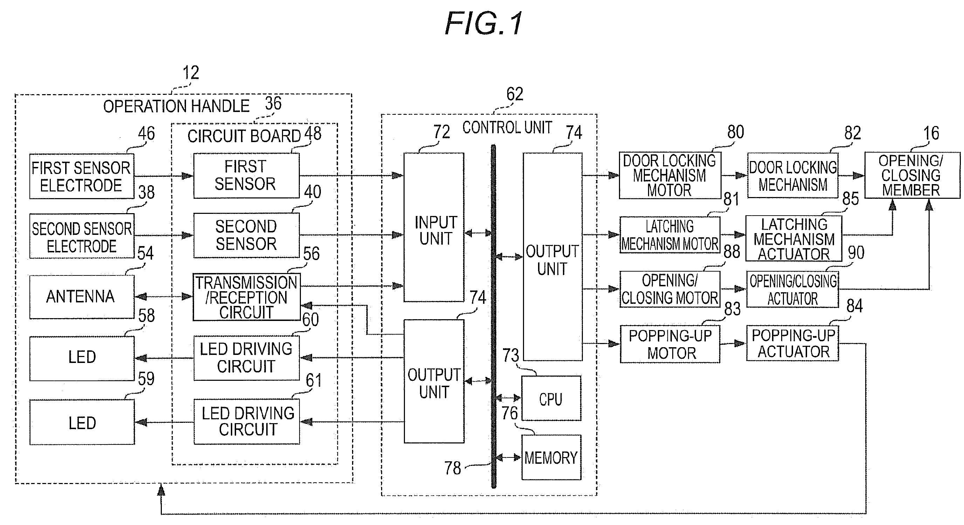

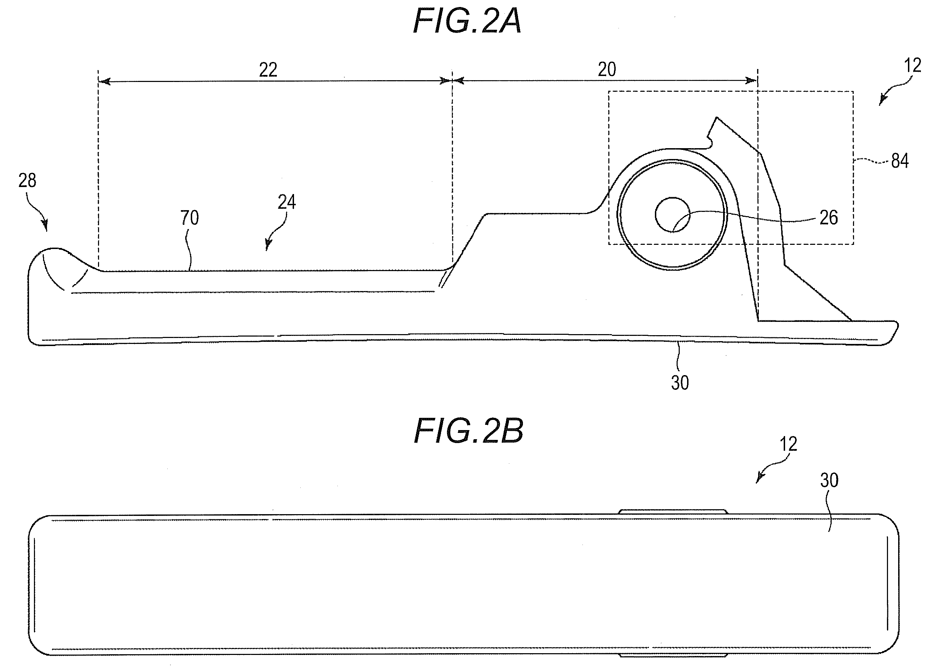

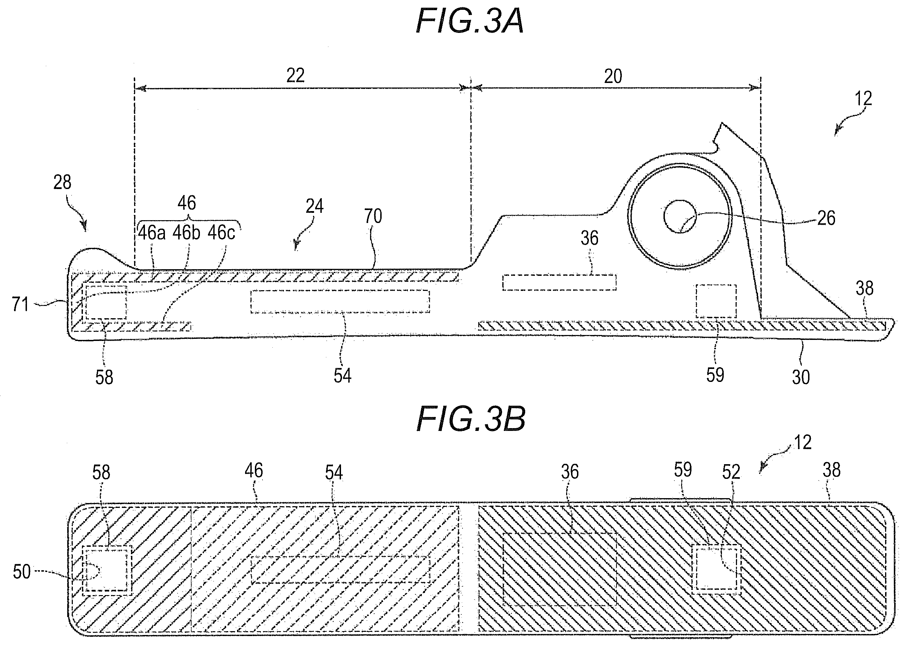

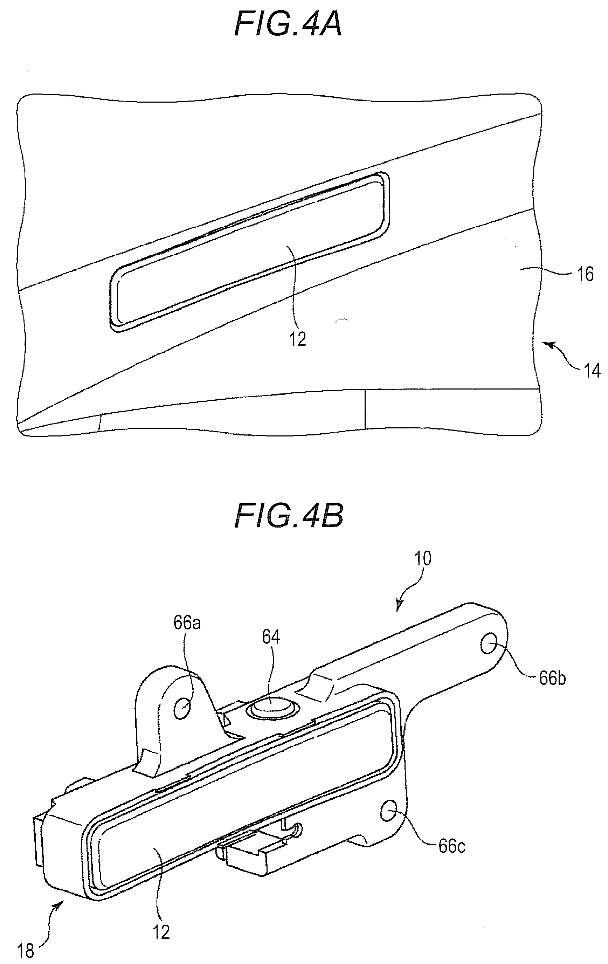

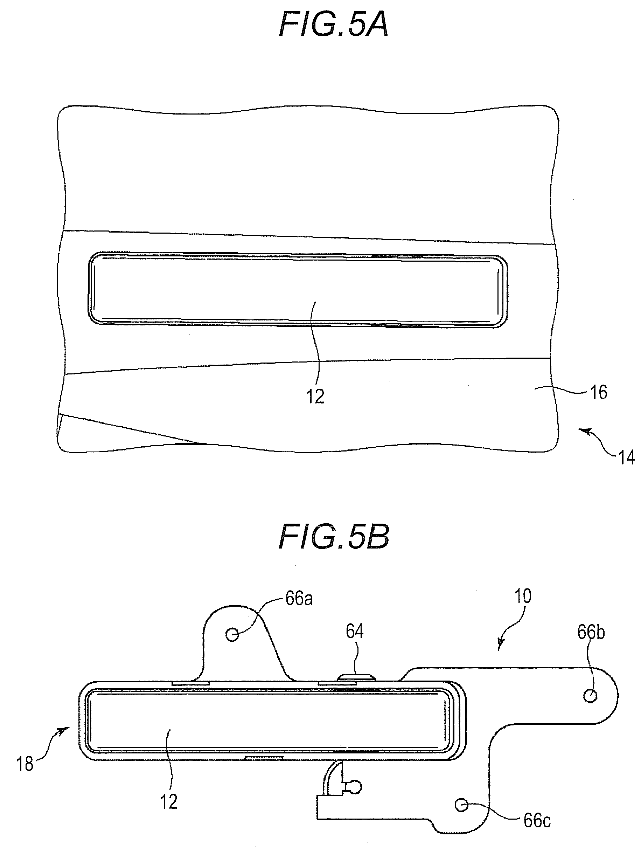

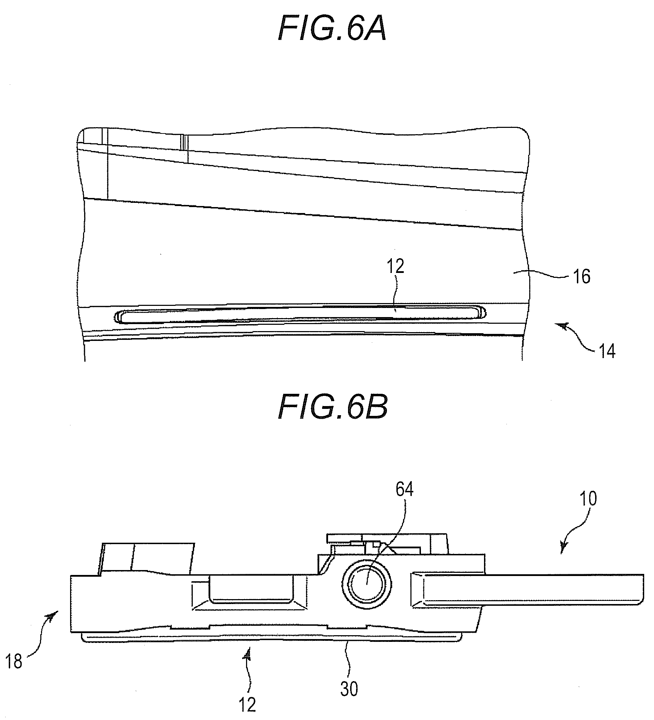

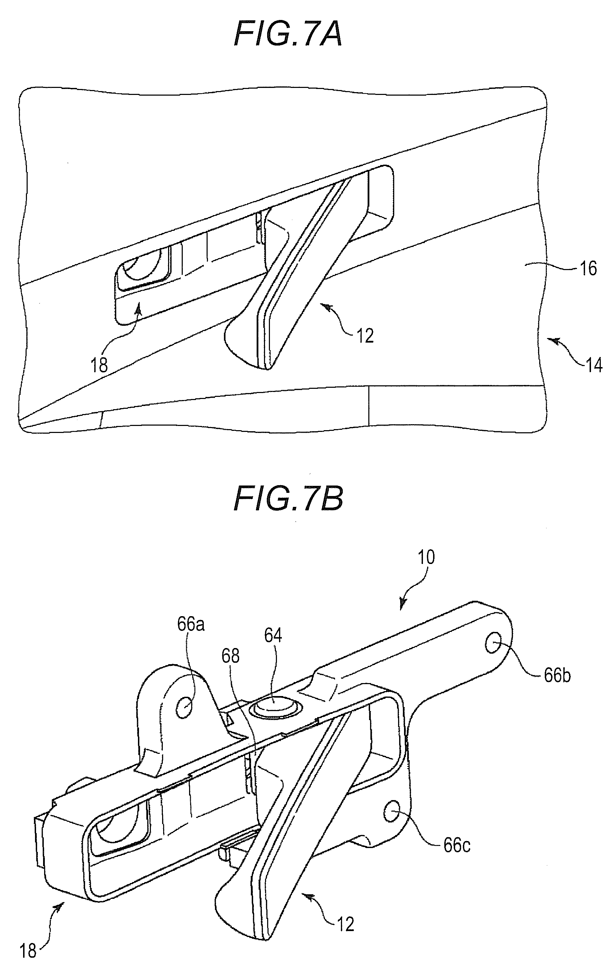

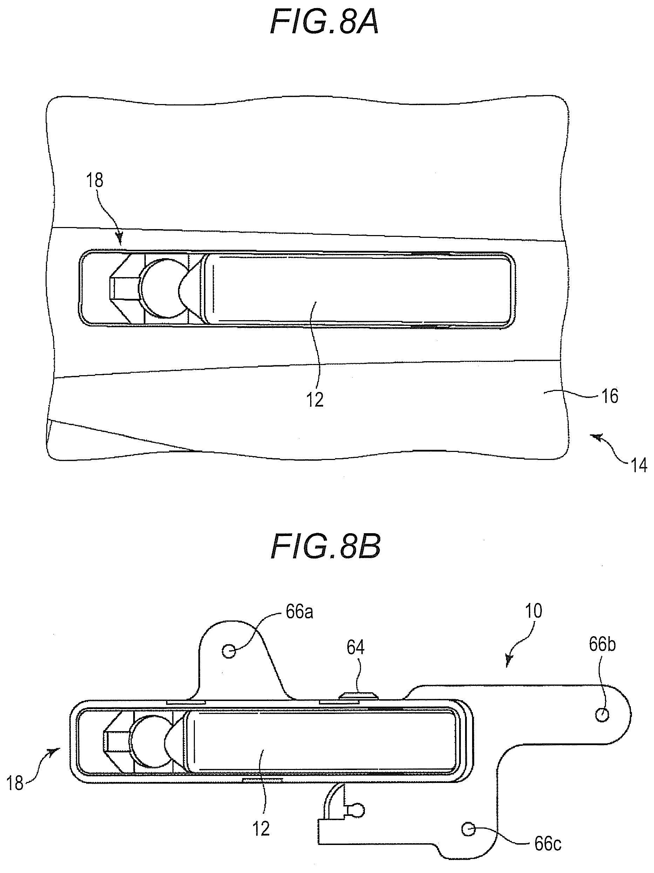

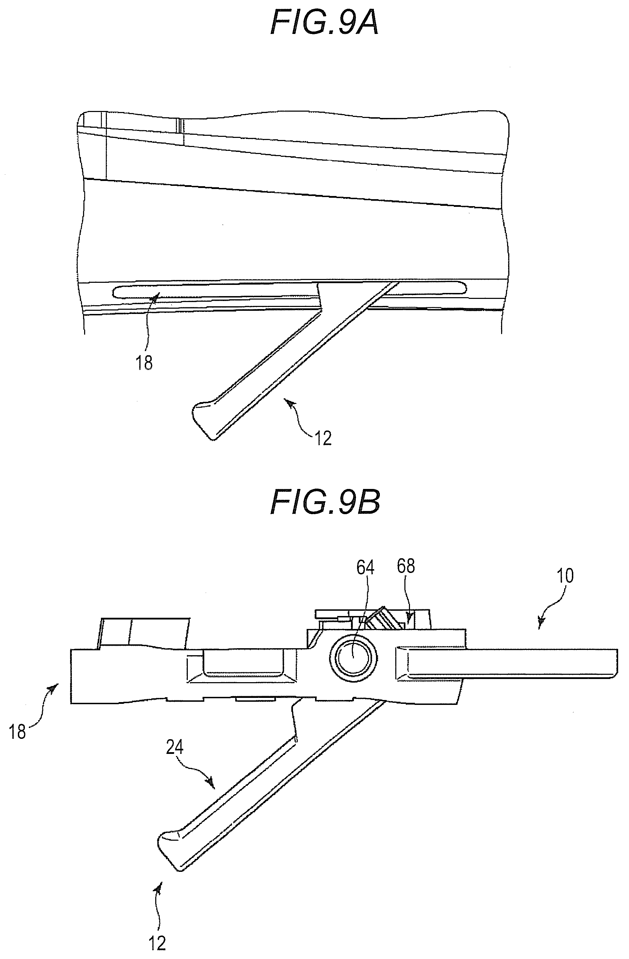

An opening/closing member opening/closing apparatus according to an embodiment is described with reference to the drawings. Fig. 1 is a block diagram illustrating the opening/closing member opening/closing apparatus according to the embodiment. Figs. 2A and 2B are a plan view and a side view of the operation handle of the opening/closing member opening/closing apparatus according to the embodiment; Fig. 2A is the plan view and Fig. 2B is the side view. Figs. 3A and 3B are a plan view and a side view of an internal configuration of the operation handle of the opening/closing member opening/closing apparatus according to the embodiment; Fig. 3A is the plan view and Fig. 3B is the side view. Figs. 4A and 4B are perspective views illustrating a state in which the operation handle is accommodated in an accommodation section. Figs. 5A and 5B are side views illustrating the state in which the operation handle is accommodated in the accommodation section. Figs. 6A and 6B are plan views illustrating the state in which the operation handle is accommodated in the accommodation section. Figs. 7A and 7B are perspective views illustrating a state in which a grip section of the operation handle projects from the accommodation section. Figs. 8A and 8B are side views illustrating the state in which the grip section of the operation handle projects from the accommodation section. Figs. 9A and 9B are plan views illustrating the state in which the grip section of the operation handle projects from the accommodation section. Figs. 4A, 5A, 6A, 7A, 8A, and 9A illustrate a state in which the opening/closing member opening/closing apparatus according to the embodiment is attached to a vehicle and Figs. 4B, 5B, 6B, 7B, 8B, and 9B illustrate a state in which a base member and the operation handle of the opening/closing member opening/closing apparatus according to the embodiment is detached from the vehicle.

As illustrated in Figs. 4A to 9B, the opening/closing member opening/closing apparatus according to the embodiment includes an operation handle 12 and a base member 10 that supports the operation handle 12 in a turning manner. In addition, as illustrated in Fig. 1, the opening/closing member opening/closing apparatus according to the embodiment further includes a control unit 62 that performs various types of control in response to operations performed through the operation handle 12 by an occupant or the like, particularly, an electronic control unit (ECU) 62.

An accommodation section 18, which can accommodate the operation handle 12, is provided in the base member 10. A turning shaft inserting hole (not illustrated), into which a turning shaft 64 for supporting, in a turning manner, the operation handle 12 is inserted, is formed in the top and under surfaces of the accommodation section 18. The turning shaft inserting hole is formed at a portion between an end portion of the accommodation section 18 on one side (right-hand side on the paper surface in Figs. 9A and 9B) in its longitudinal direction and a central portion of the accommodation section 18 in the longitudinal direction. An opening 68 is formed on the back surface side on the one side (right-hand side on the paper surface in Figs. 9A and 9B) of the accommodation section 18 in the longitudinal direction. The opening 68 is provided to enable the operation handle 12 to turn such that one side (right-hand side on the paper surface in Figs. 9A and 9B) of the operation handle 12 in its longitudinal direction does not come into contact with the back surface side of the accommodation section 18, when the operation handle 12 is caused to turn. As a material of the base member 10, for example, a resin or the like is used.

As illustrated in Figs. 2A and 2B, the operation handle (operation lever or door handle) 12 is formed to have a stick shape as a whole. A first section (thick section) 20, which is relatively thick in a normal direction to a surface 30 of the operation handle 12 on its front side, is formed on the one side (right-hand side on the paper surface in Figs. 2A and 2B) of the operation handle 12 in the longitudinal direction. A second section (thin section) 22, which is relatively thin in the normal direction to the surface 30 of the operation handle 12 on the front side, is formed on the other side (left-hand side on the paper surface in Figs. 2A and 2B) of the operation handle 12 in the longitudinal direction. As a material of the operation handle 12, for example, a resin or the like is used.

A turning shaft inserting hole 26, into which the turning shaft 64 is inserted, is formed in the first section 20 positioned on the one side (right-hand side on the paper surface in Figs. 2A and 2B) of the operation handle 12 in the longitudinal direction. The turning shaft inserting hole 26 is positioned in a portion between an end portion of the operation handle 12 on the one side (right-hand side on the paper surface in Figs. 2A and 2B) in the longitudinal direction and the central portion of the operation handle 12 in the longitudinal direction. The position of the turning shaft inserting hole 26 formed in the operation handle 12 corresponds to the position of the turning shaft inserting hole formed in the base member 10.

The second section 22 positioned on the other side (left-hand side on the paper surface in Figs. 2A and 2B) of the operation handle 12 in the longitudinal direction is a grip section 24 as a section which is gripped with a hand (not illustrated) by an occupant or the like. A boundary between the second section 22 and the first section 20 is an end portion of the grip section 24 on one side in its longitudinal direction. A portion 28, which is thicker than the grip section 24 in the normal direction to the surface 30 of the operation handle 12 on the front side, is formed at an end portion of the grip section 24 on the other side in the longitudinal direction. In this manner, the thickness of the operation handle 12 is changed in the normal direction to the surface 30 of the operation handle 12 on the front side, and thereby the grip section 24 is demarcated.

As illustrated in Figs. 7A and 7B, the turning shaft 64 is inserted into the turning shaft inserting hole 26 formed in the operation handle 12 and the turning shaft inserting hole formed in the base member 10. As the turning shaft 64, for example, a bolt or the like is used. The operation handle 12 is supported in a turning manner by the base member 10 through the turning shaft 64.

As illustrated in Figs. 7A and 7B, bolt inserting holes 66a to 66c, which fix the base member 10 to an opening/closing member (door) 16 using a bolt (not illustrated), are formed in the base member 10. The base member 10 is attached to an interior side of the opening/closing member 16 provided in a vehicle (vehicle body, body) 14 using a bolt. In other words, the base member 10, which supports the operation handle 12 in a turning manner, is disposed in the opening/closing member 16.

As illustrated in Figs. 4A to 9B, the operation handle 12 can shift between an accommodated position, at which the grip section 24 is in a state of being accommodated in the accommodation section 18, and a projecting position, at which the grip section 24 is in a state of projecting from the accommodation section 18. An operation of causing the grip section 24 to project from the accommodation section 18 is referred to as popping-up. The popping-up of the operation handle 12 is performed by using a popping-up actuator 84 (refer to Figs. 1 to 2B). When the operation handle 12 is accommodated in the accommodation section 18, the external appearance of the vehicle 14 is as illustrated in Figs. 4A to 6B (accommodated position). When the grip section 24 of the operation handle 12 projects from the accommodation section 18, the external appearance of the vehicle 14 is as illustrated in Figs. 7A to 9B (projecting position). When the operation handle 12 is accommodated in the accommodation section 18, the surface 30 of the operation handle 12 on the front side is positioned substantially as an extended surface of the surface of the opening/closing member 16 on its front side. Therefore, a flush surface of the vehicle 14 can be realized.

As illustrated in Figs. 3A and 3B, a first sensor section (detection section, detection region and sensing area) 46 is disposed on the one side (left-hand side on the paper surface in Figs. 3A and 3B) of the operation handle 12 in the longitudinal direction, specifically, in the grip section 24 of the operation handle 12.

The first sensor section 46 is configured to have, for example, a first sensor electrode. Since the first sensor section 46 is configured to have the first sensor electrode, the same reference sign 46 is assigned to the first sensor section and the first sensor electrode. The first sensor electrode 46 is electrically connected to a first sensor (first sensor element) 48 (refer to Fig. 1). The first sensor 48 is disposed, for example, in a circuit board 36. As the first sensor 48, for example, a capacitance type sensor or, more specifically, a self-capacitance type sensor can be used.

The first sensor section 46 is set in the operation handle 12. When a human appendage or an object does not come into contact with the first sensor section 46, but come into contact with a surface of the operation handle 12 in a section in which the first sensor section 46 is set, the first sensor section 46 can react. The first sensor section 46 means a section in which the first sensor 48 can react to a human appendage or an object.

The first sensor section 46 is formed by bending a plate-like body having conductivity. The first sensor section 46 includes a first portion 46a, a second portion 46b, and a third portion 46c. The first portion 46a of the first sensor section 46 is positioned on a surface 70 of the operation handle 12 on its back side. The second portion 46b of the first sensor section 46 is positioned on an end surface 71 of the operation handle 12 on the other side (left-hand side on the paper surface in Figs. 3A and 3B) in the longitudinal direction. The third portion 46c of the first sensor section 46 is positioned on the surface 30 of the operation handle 12 on the front side. The second portion 46b is bent at the right angle with respect to the first portion 46a. The third portion 46c is bent at the right angle with respect to the second portion 46b. The longitudinal direction of the first portion 46a is the same direction as the longitudinal direction of the third portion 46c. An opening 50, through which light emitted from an LED 58 to be described below passes, is formed in the third portion 46c of the first sensor section 46.

Since capacitance of the first sensor section 46 is not changed when a human appendage or an object does not come into contact with the portion in which the first sensor section 46 is disposed, the first sensor 48 does not react and an output of the first sensor 48 indicates a state of "non-detection". Since capacitance of the first sensor section 46 is changed when a human appendage or an object comes into contact with the portion in which the first sensor section 46 is disposed, the first sensor 48 reacts and an output of the first sensor 48 indicates a state of "detection".

The first sensor section 46 is used to detect an operation by an occupant or the like, through which the opening/closing member 16 enters into an unlocked state (lock releasing state). The surface 70 of the grip section 24 of the operation handle 12 on its back side is touched by a hand of the occupant or the like, and then the operation by the occupant or the like, through which the opening/closing member 16 enters into the unlocked state, is performed. Therefore, the first portion 46a of the first sensor section 46 is disposed on the surface 70 of the grip section 24 of the operation handle 12 on the back side. Further, since the surface of the grip section 24 on the back side is a part of the surface of the operation handle 12 on the back side, the same reference sign 70 is assigned to the surface of the grip section 24 on the back side and to the surface of the operation handle 12 on the back side.

The first sensor section 46 is used to detect pinching when the grip section 24 of the operation handle 12 is accommodated in the accommodation section 18. A part of the first sensor section 46 is disposed at a position at which the pinching is likely to occur such that the pinching is detected. Specifically, the second portion 46b of the first sensor section 46 is positioned on the end portion of the operation handle 12 on the other side (left-hand side on the paper surface in Figs. 3A and 3B) in the longitudinal direction. The second portion 46b of the first sensor section 46 is disposed along the end surface 71 of the operation handle 12 on the other side (left-hand side on the paper surface in Figs. 3A and 3B) in the longitudinal direction.

The first sensor section 46 is used to detect a collision of the operation handle 12 with an obstacle when the grip section 24 of the operation handle 12 projects from the accommodation section 18. A part of the first sensor section 46 is disposed at a position at which the collision of the operation handle 12 with the obstacle is likely to occur such that the collision of the operation handle with the obstacle is detected. Specifically, the second portion 46b of the first sensor section 46 is positioned on the end portion of the operation handle 12 on the other side (left-hand side on the paper surface in Figs. 3A and 3B) in the longitudinal direction. In addition, the third portion 46c of the first sensor section 46 is positioned on the surface 70 of the grip section 24 of the operation handle 12 on the back side. Further, since the surface of the grip section 24 of the operation handle 12 on the front side is a part of the surface of the operation handle 12 on the front side, the same reference sign 30 is assigned to the surface of the grip section 24 on the front side and to the surface of the operation handle 12 on the front side.

The first sensor section 46 is used to detect an operation by an occupant or the like, through which the grip section 24 of the operation handle 12 projects from the accommodation section 18, that is, an operation by an occupant or the like, through which the operation handle 12 pops up. The surface 30 of the grip section 24 of the operation handle 12 on the front side is touched by a hand of an occupant or the like, and then the operation by the occupant or the like, through which the operation handle 12 pops up, is performed. Therefore, the third portion 46c of the first sensor section 46 is disposed on the surface 30 of the grip section 24 of the operation handle 12 on the front side. More specifically, the vicinity of the end portion of the operation handle 12 on the other side (left-hand side on the paper surface in Figs. 3A and 3B) in the longitudinal direction is touched by a hand of the occupant or the like, and then the operation by the occupant or the like, through which the operation handle 12 pops up, is performed. Therefore, the third portion 46c of the first sensor section 46 is disposed in the vicinity of the end portion of the operation handle 12 on the front side (left-hand side on the paper surface in Figs. 3A and 3B).

The first sensor section 46 is used to detect an operation by the occupant or the like, through which a latch of the opening/closing member 16 is released. The surface 30 of the grip section 24 of the operation handle 12 on the front side is touched by a hand of the occupant or the like, and then the operation by the occupant or the like, through which a latch of the opening/closing member 16 is released, is performed. Therefore, the third portion 46c of the first sensor section 46 is disposed on the surface 30 of the grip section 24 of the operation handle 12 on the front side. More specifically, the vicinity of the end portion of the operation handle 12 on the other side (left-hand side on the paper surface in Figs. 3A and 3B) in the longitudinal direction is touched by a hand of the occupant or the like, and then the operation by the occupant or the like, through which the grip section 24 of the operation handle 12 projects, is performed. Since the third portion 46c of the first sensor section 46 is disposed in the vicinity of the end portion of the operation handles 12 on the other side (left-hand side on the paper surface in Figs. 3A and 3B) in the longitudinal direction, the first sensor section 46 can detect the operation by the occupant or the like, through which the latch of the opening/closing member 16 is released.

A second sensor section 38 is disposed on one side (right-hand side on the paper surface in Figs. 3A and 3B) of the operation handle 12 in the longitudinal direction. The second sensor section 38 is configured to have, for example, a second sensor electrode. Since the second sensor section 38 is configured to have the second sensor electrode, the same reference sign 38 is assigned to the second sensor section and the second sensor electrode. The second sensor section 38 is electrically connected to a second sensor (second sensor element) 40. The second sensor 40 is disposed, for example, in the circuit board 36. As the second sensor 40, for example, a capacitance type sensor or, more specifically, a self-capacitance type sensor can be used.

The second sensor section 38 is formed of a plate-like body having conductivity. The second sensor section 38 is set in the operation handle 12. When a human appendage or an object does not come into contact with the second sensor section 38, but come into contact with a surface of the operation handle 12 in a section in which the second sensor section 38 is set, the second sensor 40 can react. The second sensor section 38 means a section in which the second sensor 40 can react to a human appendage or an object. An opening 52, through which light emitted from an LED 59 to be described below passes, is formed in the second sensor section 38.

Since capacitance of the second sensor section 38 is not changed when a human appendage or an object does not come into contact with the portion in which the second sensor section 38 is disposed, the second sensor 40 does not react and an output of the second sensor 40 indicates a state of "non-detection". Since capacitance of the second sensor section 38 is changed when a human appendage or an object comes into contact with the portion in which the second sensor section 38 is disposed, the second sensor 40 reacts and an output of the second sensor 40 indicates a state of "detection".

The second sensor section 38 is used to detect an operation by an occupant or the like, through which the opening/closing member 16 enters into a locked state. The surface 30 of the operation handle 12 on the front side on the one side (right-hand side on the paper surface in Figs. 3A and 3B) of the operation handle 12 in the longitudinal direction is touched by a part of a hand 66 of an occupant or the like, and then the operation by the occupant or the like, through which the opening/closing member 16 enters into the locked state, is performed. Accordingly, the second sensor section 38 is disposed on the surface 30 of the operation handle 12 on the front side on the one side (right-hand side on the paper surface in Figs. 3A and 3B) of the operation handle 12 in the longitudinal direction.

The second sensor section 38 is used to detect an operation by an occupant or the like, through which the grip section 24 of the operation handle 12 is accommodated in the accommodation section 18. The surface 30 of the operation handle 12 on the front side on the one side (right-hand side on the paper surface in Figs. 3A and 3B) of the operation handle 12 in the longitudinal direction is touched by a hand of the occupant or the like, and then the operation by an occupant or the like, through which the grip section 24 of the operation handle 12 is accommodated in the accommodation section 18, is performed. Therefore, the second sensor section 38 is disposed on the surface 30 of the operation handle 12 on the front side on the one side (right-hand side on the paper surface in Figs. 3A and 3B) of the operation handle 12 in the longitudinal direction.

The second sensor section 38 is used to detect pinching when the grip section 24 of the operation handle 12 is accommodated in the accommodation section 18. A part of the second sensor section 38 is disposed at a position at which the pinching is likely to occur such that the pinching is detected. Specifically, a part of the second sensor section 38 is positioned on the end portion of the operation handle 12 on the one side (right-hand side on the paper surface in Figs. 3A and 3B) in the longitudinal direction.

The second sensor section 38 is used to detect a collision of the operation handle 12 with an obstacle when the grip section 24 of the operation handle 12 is caused to be accommodated in the accommodation section 18. A part of the second sensor section 38 is disposed at a position at which the collision of the operation handle 12 with the obstacle is likely to occur such that the collision of the operation handle 12 with the obstacle is detected. Specifically, a part of the second sensor section 38 is positioned on the end portion of the operation handle 12 on the one side (right-hand side on the paper surface in Figs. 3A and 3B) in the longitudinal direction.

The second sensor section 38 is used to detect an operation by an occupant or the like, through which an engine (not illustrated) provided in the vehicle 14 is stopped. The surface 30 of the operation handle 12 on the front side on the one side (right-hand side on the paper surface in Figs. 3A and 3B) of the operation handle 12 in the longitudinal direction is touched by a part of the hand 66 of the occupant or the like, and then the operation by the occupant or the like, through which the engine is stopped, is performed. Since the second sensor section 38 is disposed on the surface 30 of the operation handle 12 on the front side on the one side (right-hand side on the paper surface in Figs. 3A and 3B) of the operation handle 12 in the longitudinal direction, the second sensor section 38 can detect the operation by the occupant or the like, through which the engine is stopped.

In addition, an antenna 54 is disposed on the other side (left-hand side on the paper surface in Figs. 3A and 3B) of the operation handle 12 in the longitudinal direction. The antenna 54 can be used to transmit, toward a wireless remote controller, a low frequency (LF) signal for detecting whether or not the wireless remote controller (smart key) is positioned close to the vehicle 14. Further, the antenna 54 can be used not only to transmit a signal but to receive a signal. The wireless remote controller is used when the locking or unlocking operation of the opening/closing member 16 is performed from a place separated from the vehicle 14. In addition, the wireless remote controller is used when a locking or unlocking operation of the opening/closing member 16 is performed from a place separated from the vehicle 14. The antenna 54 is electrically connected to a transmission/reception circuit 56 disposed in the circuit board 36. Further, the circuit board 36 is accommodated in the first section 20 which is relatively thick in the normal direction to the surface 30 of the operation handle 12 on the front side.

In addition, the LED 58 is disposed on the other side (left-hand side on the paper surface in Figs. 3A and 3B) of the operation handle 12 in the longitudinal direction. The LED 58 is electrically connected to an LED driving circuit 60 disposed in the circuit board 36. The LED driving circuit 60 causes the LED 58 to be turned on when the first sensor 48 reacts.

In addition, the LED 59 is disposed on the one side (right-hand side on the paper surface in Figs. 3A and 3B) of the operation handle 12 in the longitudinal direction. The LED 59 is electrically connected to the LED driving circuit 61 disposed in the circuit board 36. The LED driving circuit 61 causes the LED 59 to be turned on when the second sensor 40 reacts.

As illustrated in Fig. 1, the control unit 62 includes an input unit 72, a central processing unit (CPU) 73, an output unit 74, and a memory 76. The input unit 72, the CPU 73, the output unit 74, and the memory 76 can input and output a signal (data) to and from each other through a bus line 78.

A signal from the first sensor 48 is input to the input unit 72 of the control unit 62. The CPU 73 can detect an operation by an occupant or the like, the pinching, the collision with the obstacle, on the basis of the signal from the first sensor 48. In addition, a signal from the second sensor 40 is input to the input unit 72 of the control unit 62. The CPU 73 can detect an operation by an occupant or the like, the pinching, the collision with the obstacle, on the basis of the signal from the second sensor 40. In addition, a signal from the transmission/reception circuit 56 is input to the input unit 72 of the control unit 62. The CPU 73 can detect details of an operation performed by using the wireless remote controller, on the basis of the signal from the transmission/reception circuit 56.

The transmission/reception circuit 56 is connected to the output unit 74 of the control unit 62. The CPU 73 controls the transmission/reception circuit 56 through the output unit 74, thereby making it possible to transmit a signal from the antenna 54 to the wireless remote controller. In addition, the LED driving circuit 60 is connected to the output unit 74 of the control unit 62. The CPU 73 can control the LED 58 through the output unit 74 and the LED driving circuit 60 such that the LED shows a mark. The LED driving circuit 61 is connected to the output unit 74 of the control unit 62. The CPU 73 controls the LED 59 through the output unit 74 and the LED driving circuit 61 such that the LED shows a mark.

In addition, a motor (door locking mechanism motor) 80 which drives a door locking mechanism 82 is connected to the output unit 74 of the control unit 62. The door locking mechanism 82 performs locking and unlocking of the opening/closing member 16. The CPU 73 drives the door locking mechanism 82 through the output unit 74 such that the door locking mechanism motor 80 rotates, thereby making it possible for the opening/closing member 16 to enter into the locked state or the unlocked state.

In addition, a motor (latching mechanism motor) 81 which drives a latching mechanism 85 is connected to the output unit 74 of the control unit 62. The latching mechanism 85 performs latching and unlatching (latching release) of the opening/closing member 16. The CPU 73 drives the latching mechanism 85 through the output unit 74 such that the latching mechanism motor 81 rotates, thereby making it possible for the opening/closing member 16 to enter into a latched state or an unlatched state.

In addition, a motor (opening/closing motor) 88, which drives an opening/closing actuator (opening/closing mechanism) 90 provided with respect to the opening/closing member 16, is connected to the output unit 74 of the control unit 62. The CPU 73 drives the opening/closing mechanism 90 by causing the opening/closing motor 88 to rotate through the output unit 74, thereby making it possible to perform opening and closing of the opening/closing member 16.

In addition, a motor (popping-up motor) 83, which drives a popping-up actuator 84, is connected to the output unit 74 of the control unit 62. The CPU 73 drives the popping-up actuator 84 by causing the popping-up motor 83 to rotate through the output unit 74, thereby making it possible for the grip section 24 of the operation handle 12 to project from the accommodation section 18, and making it possible for the operation handle 12 to be accommodated in the accommodation section 18.

Next, an operation of the opening/closing member opening/closing apparatus according to the embodiment will be described with reference to the drawings.

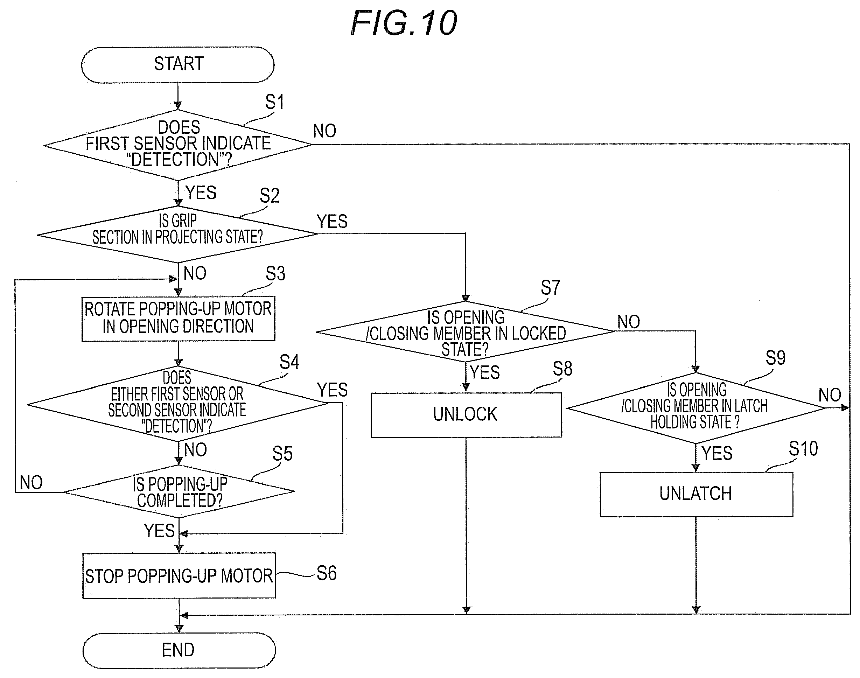

First, an operation performed in a case where the portion, in which the first sensor section 46 is disposed, is touched by a part of an appendage of an occupant or the like will be described with reference to Fig. 10. Fig. 10 is a flowchart illustrating the operation of the opening/closing member opening/closing apparatus according to the embodiment.

In a case where the portion, in which the first sensor section 46 is disposed, is touched by a part of an appendage of an occupant or the like, an output of the first sensor 48 indicates a state of "detection". In the case where the output of the first sensor 48 indicates the state of "detection" in a state in which the operation handle 12 does not turn (YES in Step S1), the CPU 73 determines whether or not the operation handle 12 is in a projecting state. More specifically, the CPU 73 determines whether or not the operation handle 12 is positioned at a projecting position. The projecting position is a position of the operation handle 12 in a state in which the operation handle 12 is caused to turn and to project to a predetermined position. Whether or not the operation handle 12 is in the projecting state can be detected, for example, by a switch, a sensor, or the like (not illustrated) which monitors a state of the operation handle 12. The switch, the sensor, or the like, which monitors a state of the operation handle 12, may be provided in the operation handle 12 or on the periphery of the operation handle 12.

In a case where the grip section 24 of the operation handle 12 is not in the projecting state (NO in Step S2), it is considered that an occupant or the like tries to cause the operation handle 12 to project (to pop up). Accordingly, in this case, the CPU 73 causes the popping-up motor 83 to rotate in an opening direction and causes the operation handle 12 to start rotating such that the grip section 24 of the operation handle 12 projects from the accommodation section 18 (Step S3).

When the operation handle 12 is caused to rotate, the CPU 73 checks whether or not the output of the first sensor 48 or the second sensor 40 indicates a state of "detection" (Step S4). When the operation handle 12 is caused to rotate, it is considered that the pinching by the operation handle 12 or a collision of the operation handle 12 with an obstacle does not occur in a case where the output of the first sensor 48 or the second sensor 40 indicates a state of "non-detection" (NO in Step S4). Accordingly, in a case where the output of the first sensor 48 or the second sensor 40 indicates a state of "non-detection" and the popping-up is not completed (NO in Step S5), the CPU 73 causes the popping-up motor 83 to continuously rotate (Step S3).

In a case where the output of the first sensor 48 or the second sensor 40 indicates a state of "detection" when the operation handle 12 is caused to rotate (YES in Step S4), it is considered that the pinching by the operation handle 12 or a collision of the operation handle 12 with an obstacle occurs. In this case, the CPU 73 causes the popping-up motor 83 to be stopped (Step S6).

In a case where the popping-up of the operation handle 12 is completed (YES in Step S5), the CPU 73 stops the popping-up motor 83 (Step S6).

In a case where the operation handle 12 already pops up, that is, in a case where the grip section 24 of the operation handle 12 is in the projecting state (YES in Step S2), it is considered that an occupant or the like tries to perform an operation different from the popping-up of the operation handle 12. Accordingly, in a case where the grip section 24 of the operation handle 12 is in the projecting state (YES in Step S2), the CPU 73 checks whether or not the opening/closing member 16 is in the locked state (Step S7). In a case where the opening/closing member 16 is in the locked state (YES in Step S7), the CPU 73 causes the door locking mechanism motor 80 to rotate such that the door locking mechanism 82 is driven and the opening/closing member 16 enters into the unlocked state (Step S8).

Since the opening/closing member is already unlocked in a case where the opening/closing member 16 is not in the locked state (NO in Step S7), it is considered that an occupant or the like tries to perform an operation different from the unlocking. Accordingly, in the case where the opening/closing member 16 is not in the locked state (NO in Step S7), the CPU 73 checks whether or not the opening/closing member 16 is in the latch holding state (Step S9). In the case where the opening/closing member 16 is in the latch holding state (YES in Step S9), the CPU 73 causes the latching mechanism motor 81 to rotate such that the latching mechanism 85 is driven and the opening/closing member 16 is unlatched (Step S10).

In this manner, in the embodiment, in a case where the operation handle 12 is not positioned at the projecting position, the operation handle 12 is caused to rotate in response to detection by the first sensor section 46 and the grip section 24 of the operation handle 12 projects from the accommodation section 18. In addition, in the embodiment, in a state in which the operation handle 12 is caused to rotate, the turning of the operation handle 12 is caused to be stopped in response to detection by the first sensor section 46 or the second sensor section 38. In addition, in the embodiment, in a case where the operation handle 12 is positioned at the projecting position and the opening/closing member 16 is in the locked state, the opening/closing member 16 enters into the unlocked state in response to the detection by the first sensor section 46. In addition, in the embodiment, in a case where the operation handle 12 is positioned at the projecting position and the opening/closing member 16 enters into the unlocked state, the opening/closing member 16 is unlatched in response to the detection by the first sensor section 46.

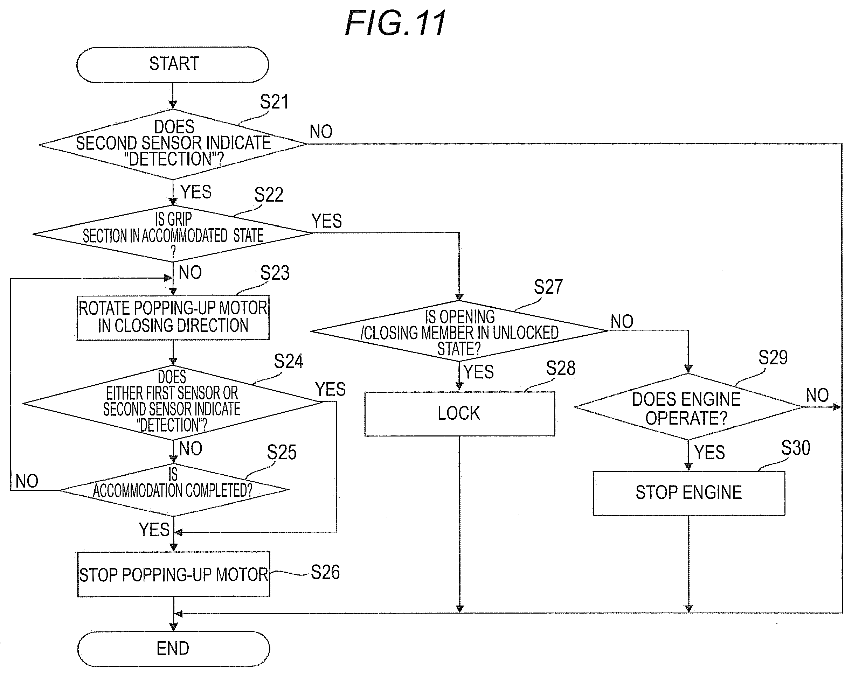

Next, another operation performed when the section, in which the second sensor section 38 is disposed, is touched by a part of an appendage of an occupant or the like, will be described with reference to Fig. 11. Fig. 11 is a flowchart illustrating the operation of the opening/closing member opening/closing apparatus according to the embodiment.

In a case where the portion, in which the second sensor section 38 is disposed, is touched by a part of an appendage of an occupant or the like, an output of the second sensor 40 indicates a state of "detection" (YES in Step S21). In the case where the output of the second sensor 40 indicates the state of "detection" in a state in which the grip section 24 of the operation handle 12 is not caused to turn (YES in Step S21), the CPU 73 determines whether or not the operation handle 12 is in an accommodated state. More specifically, the CPU 73 determines whether or not the operation handle 12 is positioned at an accommodated position. The accommodated position is a position of the operation handle 12 in a state in which the operation handle 12 is caused to turn and to be accommodated at a predetermined position. Whether or not the operation handle 12 is in the accommodated position can be detected, for example, by a switch, a sensor, or the like (not illustrated) which monitors a state of the operation handle 12.

In a case where the grip section 24 of the operation handle 12 is not in the accommodated state (NO in Step S22), it is considered that an occupant or the like tries to cause the operation handle 12 to be accommodated. Accordingly, in this case, the CPU 73 causes the popping-up motor 83 to rotate and causes the operation handle 12 to start rotating such that the grip section 24 of the operation handle 12 is accommodated in the accommodation section 18 (Step S23).

When the operation handle 12 is caused to rotate, the CPU 73 checks whether or not the output of the first sensor 48 or the second sensor 40 indicates the state of "detection" (Step S24). When the operation handle 12 is caused to rotate, it is considered that pinching by the operation handle 12 or a collision of the operation handle 12 with an obstacle does not occur in a case where the output of the first sensor 48 or the second sensor 40 indicates the state of "non-detection" (NO in Step S24). Accordingly, in a case where the output of the first sensor 48 or the second sensor 40 indicates the state of "non-detection" and the accommodation of the operation handle 12 is not completed (NO in Step S25), the CPU 73 causes the popping-up motor 83 to continuously rotate (Step S23).

In a case where the output of the first sensor 48 or the second sensor 40 indicates the state of "detection" (YES in Step S24), it is considered that pinching by the operation handle 12 or a collision of the operation handle 12 with an obstacle occurs. In this case, the CPU 73 stops the popping-up motor 83 (Step S26).

In a case where the accommodation of the grip section 24 of the operation handle 12 in the accommodation section 18 is completed (YES in Step S25), the CPU 73 stops the popping-up motor 83 (Step S26).

In a case where the grip section 24 of the operation handle 12 is already in the accommodated state (YES in Step S22), it is considered that an occupant or the like tries to perform an operation different from the accommodation of the grip section 24 of the operation handle 12 in the accommodation section 18. Accordingly, in the case where the grip section 24 of the operation handle 12 is in the accommodated state (YES in Step S22), the CPU 73 checks whether or not the opening/closing member 16 is in the unlocked state (Step S27). In the case where the opening/closing member 16 is in the unlocked state (YES in Step S27), the CPU 73 causes the door locking mechanism motor 80 to rotate such that the door locking mechanism 82 is driven and the opening/closing member 16 enters into the locked state (Step S28).

Since the opening/closing member is already locked in a case where the opening/closing member 16 is not in the unlocked state (NO in Step S27), it is considered that an occupant or the like tries to perform an operation different from the locking. Accordingly, in the case where the opening/closing member 16 is not in the unlocked state (NO in Step S27), the CPU 73 checks whether or not the engine operates (Step S29). In the case where the engine operates (YES in Step S29), the CPU 73 performs control of stopping the engine (Step S30).

In this manner, in the embodiment, in a case where the grip section 24 of the operation handle 12 is not positioned at the accommodated position, the operation handle 12 is caused to rotate in response to detection by the second sensor section 38 and the grip section 24 of the operation handle 12 is accommodated in the accommodation section 18. In addition, in the embodiment, in a state in which the operation handle 12 is caused to rotate, the turning of the operation handle 12 is caused to be stopped in response to detection by the first sensor section 46 or the second sensor section 38. In addition, in the embodiment, in a case where the operation handle 12 is positioned at the accommodated position and the opening/closing member 16 is in the unlocked state, the opening/closing member 16 enters into the locked state in response to the detection by the second sensor section 38. In addition, in the embodiment, in a case where the operation handle 12 is positioned at the accommodated position and the opening/closing member 16 enters into the locked state, the engine is stopped in response to the detection by the second sensor section 38.

In this manner, in the embodiment, in a case where the operation handle 12 is positioned at a first position, control thereof is performed in response to the detection by the sensor section 46 or 38. In addition, in the embodiment, in a case where the operation handle 12 is positioned at a second position different from the first position, second control different from the first control is performed in response to the detection by the sensor section 46 or 38. In other words, in the embodiment, various types of control are performed by using the common sensor sections 46 and 38. According to the embodiment, various types of control are performed by using the common sensor sections 46 and 38, it is possible to simplify a configuration of the operation handle 12 and, especially, it is possible to contribute to cost reduction of the opening/closing member opening/closing apparatus.

### Modification Example 1

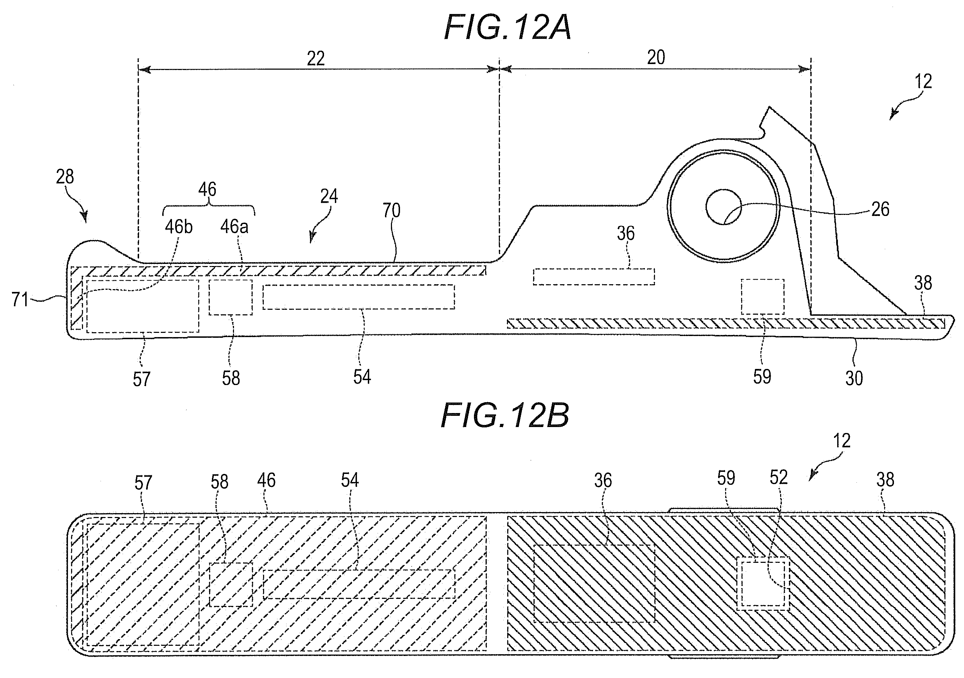

Next, a modification example of the opening/closing member opening/closing apparatus according to the embodiment will be described with reference to Figs. 12A and 12B. Figs. 12A and 12B are a plan view and a side view illustrating an operation handle of an opening/closing member opening/closing apparatus according to the modification example; Fig. 12A is the plan view and Fig. 12B is the side view.

In the opening/closing member opening/closing apparatus according to the modification example, a high dielectric 57 having a relative dielectric constant higher than that of a material of the grip section 24 is disposed between the first portion 46a of the first sensor section 46 disposed on the surface 70 of the grip section 24 on the back side and the surface 30 of the grip section 24 on the front side.

As illustrated in Fig. 12A, the first sensor section 46 includes the first portion 46a and the second portion 46b. The first portion 46a of the first sensor section 46 is positioned on the surface 70 of the operation handle 12 on the back side. The second portion 46b of the first sensor section 46 is positioned on the end surface 71 of the operation handle 12 on the other side (left-hand side on the paper surface in Figs. 12A and 12B) in the longitudinal direction. The second portion 46b is bent at the right angle with respect to the first portion 46a. In the modification example, the first sensor section 46 does not include the third portion 46c (refer to Fig. 3A).

The high dielectric 57 having a relative dielectric constant higher than that of a material of the grip section 24 is disposed between the first portion 46a of the first sensor section 46 disposed on the surface 70 of the grip section 24 on the back side and the surface 30 of the grip section 24 on the front side. The high dielectric 57 is disposed in the vicinity of the end portion of the operation handle 12 on the other side (left-hand side on the paper surface in Figs. 12A and 12B) in the longitudinal direction. When the portion, in which the high dielectric 57 is disposed, is touched by a part of an appendage of an occupant or the like, capacitance of the first sensor section 46 is changed and the first sensor 48 reacts. In other words, when the portion, in which the high dielectric 57 is disposed, is touched by a part of the appendage of the occupant or the like, detection thereof is performed by the first sensor section 46.

In this manner, the high dielectric 57 having a relative dielectric constant higher than that of a material of the grip section 24 may be disposed between the first portion 46a of the first sensor section 46 disposed on the surface 70 of the grip section 24 on the back side and the surface 30 of the grip section 24 on the front side.

### Modification Example 2

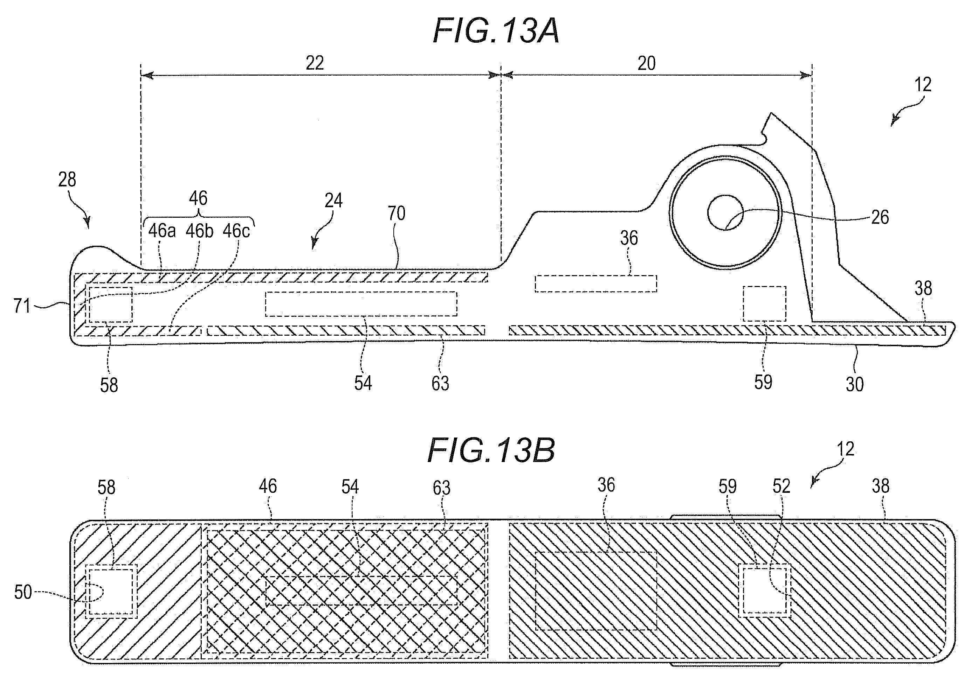

Next, a modification example of the opening/closing member opening/closing apparatus according to the embodiment will be described with reference to Figs. 13A and 13B. Figs. 13A and 13B are a plan view and a side view illustrating an operation handle of an opening/closing member opening/closing apparatus according to the modification example; Fig. 13A is the plan view and Fig. 13B is the side view.

In the opening/closing member opening/closing apparatus according to the modification example, a grounded conductor 63 is disposed in a part of the surface 30 of the operation handle 12 on the front side.

As illustrated in Figs. 13A and 13B, the grounded conductor 63 is disposed in a part of the surface 30 of the operation handle 12 on the front side. The conductor 63 is, for example, molded to have a plate shape. In the modification example, the grounded conductor 63 is disposed in a part of the surface 30 of the operation handle 12 on the front side such that the first sensor 48 does not react when the portion is touched by a part of an appendage of an occupant or the like.

In the case where the portion, in which the third portion 46c of the first sensor section 46 is disposed, is touched by a part of the appendage of the occupant or the like, the first sensor 48 reacts; however, in the case where the portion, in which the conductor 63 is disposed, is touched by a part of the appendage of the occupant or the like, the first sensor 48 does not react. Since the first sensor 48 does not react in the case where the portion, in which the conductor 63 is disposed, is touched by a part of the appendage of the occupant or the like, according to the modification example, it is possible to perform the popping up in the case where the portion, in which the third portion 46c of the first sensor section 46 is disposed, is touched by a part of the appendage of the occupant or the like.

### Modified Embodiment

Various modifications can be performed without limiting to the embodiment described above.

For example, the shape or position of the first sensor section 46 or the second sensor section 38 is not limited thereto as described above, but can be appropriately set.

In addition, in the embodiment described above, the case where a capacitance type sensor is used as the sensors 48 and 40 is described as an example; however, the sensors are not limited thereto. For example, as the sensors 48 and 40, a piezoelectric element or the like may be used.

In addition, in the embodiment described above, the case where the sensor sections 46 and 38 are configured to have the sensor electrode is described as an example; however, the sensor sections are not limited thereto. For example, a sensor element may be disposed in the sensor sections 46 and 38.

In addition, in the embodiment described above, the case where the sensor sections 46 and 38 are configured to have the sensor electrode is described as an example; however, the sensor sections are not limited thereto. For example, as the sensors 48 and 40, a push-button switch may be used.

In addition, in the embodiment described above, the case where the contact sensor is used as the sensors 48 and 40 is described as an example; however, the sensors are not limited thereto. For example, as the sensors 48 and 40, a proximity sensor may be used. In addition, as the sensors 48 and 40, an infrared sensor, an ultrasonic sensor, or the like may be used.

In addition, in the embodiment described above, the state in which the circuit board 36 is accommodated in the first section 20 relatively thick in the normal direction to the surface 30 of the operation handle 12 on the front side is described as an example; however, the position of the circuit board 36 is not limited thereto. For example, the circuit board 36 may be accommodated in the operation handle 12 in the vicinity of the end portion of the operation handle 12 on the one side (right-hand side on the paper surface in Figs. 3A and 3B) in the longitudinal direction.

In addition, the case in which the popping-up motor 83 is caused to rotate such that the popping-up actuator 84 is driven is described as an example; however, the driving is not limited thereto. For example, as the popping-up actuator 84, a hydraulic actuator or a pneumatic actuator may be used.

The conductor 63 illustrated in Figs. 13A and 13B may be further disposed in the operation handle 12 illustrated in Figs. 12A and 12B.

In addition, in the embodiment, the case where the second portion 46b of the first sensor section 46 is bent at the right angle with respect to the first portion 46a and the third portion 46c is bent at the right angle with respect to the second portion 46b is described as an example; however, the portions are not limited thereto. For example, the first sensor section 46 may be formed to have a curved shape.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed. Accordingly, it is expressly intended that all such variations, changes and equivalents which fall within the scope of the present invention as defined in the claims, be embraced thereby.

## Claims

1. An opening/closing member opening/closing apparatus comprising:
an operation handle (12) having a sensor section (38, 46) and supported in a turning manner by a base member (10) configured to be disposed in an opening/closing member (16) of a vehicle (14); and
a CPU (73) that is configured to perform first control in response to detection by the sensor section (38, 46) in a case where the operation handle (12) is positioned at a first position, and to perform second control different from the first control in response to detection by the sensor section (38, 46) in a case where the operation handle (12) is positioned at a second position different from the first position.

2. The opening/closing member opening/closing apparatus according to claim 1,
wherein the CPU (73) is configured to cause the operation handle (12) to stop turning in response to detection by the sensor section (38, 46) when the operation handle (12) is caused to turn.

3. The opening/closing member opening/closing apparatus according to claim 1,
wherein the first position is a projecting position at which a grip section (24) of the operation handle (12) is in a state of projecting from an accommodation section (18) formed in the base member (10),
wherein the first control is control of locking release of the opening/closing member, and
wherein the second control is control of causing the grip section (24) to project.

4. The opening/closing member opening/closing apparatus according to claim 3,
wherein the CPU (73) is configured to perform control of releasing a latch of the opening/closing member in response to detection by the sensor section (46) in a case where the operation handle (12) is positioned at the first position and the locking of the opening/closing member is released.

5. The opening/closing member opening/closing apparatus according to claim 1,
wherein the first position is an accommodated position at which a grip section (24) of the operation handle (12) is in a state of being accommodated in an accommodation section (13) formed in the base member (10),
wherein the first control is control of locking the opening/closing member, and
wherein the second control is control of accommodating the grip section (24).

6. The opening/closing member opening/closing apparatus according to claim 5,
wherein the CPU (73) is configured to perform control of stopping an engine of the vehicle, in which the opening/closing member is disposed, in a case where the operation handle (12) is positioned at the first position and the opening/closing member is locked.

7. The opening/closing member opening/closing apparatus according to any one of claims 1 to 4,
wherein a part (46a) of the sensor section (46) is disposed on a surface (70) of the grip section (24) on the back side thereof, and
wherein another part (46c) of the sensor section (46) is disposed on a surface of the grip section (24) on the front side thereof.

8. The opening/closing member opening/closing apparatus according to any one of claims 1 to 4,
wherein the sensor section (46) is disposed on a surface (70) of the grip section (24) on the back side thereof, and
wherein a high dielectric (57) having a relative dielectric constant higher than that of a material of the grip section (24) is disposed between the sensor section (46) and a surface of the grip section (24) on the front side thereof.

9. The opening/closing member opening/closing apparatus according to claim 7 or 8,
wherein a grounded conductor (63) is disposed in at least a part of a surface of the grip section (24) on the front side thereof.

10. The opening/closing member opening/closing apparatus according to any one of claims 1 to 9,
wherein a part (46b) of the sensor section (46) is positioned on an edge section (71) of the operation handle (12).

11. The opening/closing member opening/closing apparatus according to any one of claims 1 to 10,
wherein the sensor section (38, 46) is electrically connected to a capacitance type sensor.
